# EUROPEAN PATENT APPLICATION

(11) **EP 4 296 714 A1**
(43) Date of publication of application: **27.12.2023**
(21) Application number: 22810303.2
(22) Date of filing: 28.04.2022
(51) Int. Cl.: G01S 7/481, G02F 1/295, G02B 6/13

(54) **OPTICAL PHASED BOARD, MANUFACTURING METHOD, AND OPTICAL PHASED ARRAY SYSTEM**

(30) Priority: 28.05.2021 CN 202110594921
(71) Applicant: Huawei Technologies Co., Ltd., Shenzhen, Guangdong 518129 (CN)
(72) Inventor: DENG, Chaojun, Shenzhen, Guangdong 518129 (CN); WEI, Xiaoyun, Shenzhen, Guangdong 518129 (CN); YANG, Yong, Shenzhen, Guangdong 518129 (CN); ZANG, Dajun, Shenzhen, Guangdong 518129 (CN)
(74) Representative: Isarpatent
(86) International application number: PCT/CN2022/089720
(87) International publication number: WO 2022/247574

(57) **Abstract**

An optical phased board, a manufacturing method, and an optical phased array system are disclosed, and pertain to the field of beam scanning technologies. The optical phased board includes a plurality of optical waveguide layers (1) and a plurality of isolation layers (2). Each optical waveguide layer (1) includes a plurality of optical waveguides (11), and the plurality of optical waveguides (11) are arranged side by side; and the plurality of optical waveguide layers (1) and the plurality of isolation layers (2) are arranged in a superimposed manner, and each isolation layer (2) is located between two adjacent optical waveguide layers (1). The optical phased board includes a two-dimensional optical waveguide array, and therefore can perform two-dimensional beam scanning. In addition, in comparison with performing two-dimensional beam scanning by using a two-dimensional optical antenna array, resolution and a scanning angle of the beam scanning can be improved.

## Description

This application claims priority to Chinese Patent Application No. 202110594921.5, filed on May 28, 2021 and entitled "OPTICAL PHASED BOARD, MANUFACTURING METHOD, AND OPTICAL PHASED ARRAY SYSTEM", which is incorporated herein by reference in its entirety.

### TECHNICAL FIELD

This application relates to the field of beam scanning technologies, and in particular, to an optical phased board, a manufacturing method, and an optical phased array system.

### BACKGROUND

An optical phased array system is a system that controls beam scanning by adjusting a phase of laser light. The system is widely used in optical devices such as a laser radar, a laser display, and optical communication.

In terms of a structure, the optical phased array system may include a light source, a coupling optical splitter, and an optical phased plate. The optical phased plate may also be referred to as a waveguide plate, and includes a plurality of optical waveguides arranged side by side. The optical waveguide is a channel for light transmission. The light source, the coupling optical splitter, and the optical phased plate are sequentially arranged along an optical transmission path.

In this way, a light beam generated by the light source is split into optical waveguides of the optical phased plate by using the coupling optical splitter. Both sides of each optical waveguide have electrodes, and the electrodes are configured to apply a voltage to the optical waveguide, and perform phase modulation on a light beam transmitted in the optical waveguide, so that the light beam is deflected, and one-dimensional linear scanning is performed on the light beam in a plane on which the optical phased plate is located.

However, the foregoing optical phased plate can perform only one-dimensional beam scanning. Therefore, flexibility in using the optical phased plate is poor.

### SUMMARY

This application provides an optical phased board, a manufacturing method, and an optical phased array system, to resolve a problem in a related technology. The technical solutions are as follows:
According to an aspect, an optical phased board is provided, where the optical phased board includes a plurality of optical waveguide layers and a plurality of isolation layers.

Each optical waveguide layer includes a plurality of optical waveguides, where the plurality of optical waveguides are arranged side by side.

The plurality of optical waveguide layers and the plurality of isolation layers are arranged in a superimposed manner, and each isolation layer is located between two adjacent optical waveguide layers.

The optical waveguide is a channel for light beam transmission, and a material of the optical waveguide may be any one of an electro-optic material, a thermo-optic material, or a silicon-based material, for example, may be lithium niobate, lithium tantalate, or indium phosphate in the electro-optic material.

In the solutions according to this application, the optical phased board may include m optical waveguide layers, and each optical waveguide layer includes n optical waveguides, where both m and n are integers greater than 1. Then, after the m optical waveguide layers are arranged in a superimposed manner, an m×n optical waveguide array with m rows and n columns may be obtained. Then, two-dimensional beam scanning may be performed on a light beam emitted from the m×n optical waveguide array.

In the solutions according to this application, when the optical phased board is used for performing one-dimensional beam scanning, a light beam may be controlled to be introduced into an optical waveguide in one of the optical waveguide layers, and a light beam is emitted from the optical waveguide in the optical waveguide layer, to implement the one-dimensional beam scanning. When the optical phased board is used for performing two-dimensional beam scanning, a light beam may be controlled to be introduced into an optical waveguide in each optical waveguide layer, and a light beam is emitted from the optical waveguide in each optical waveguide layer, to implement the two-dimensional beam scanning.

It can be learned that, by using the optical phased board, not only the one-dimensional beam scanning can be performed, but also the two-dimensional beam scanning can be performed, thereby improving flexibility in using the optical phased board.

In a possible implementation, each isolation layer includes a first filling layer and a support layer.

The first filling layer is located in an optical waveguide gap of one of two adjacent optical waveguide layers, and the support layer is located between the first filling layer and the other optical waveguide layer.

The first filling layer is configured to fill the optical waveguide gap, and the support layer is configured to support an optical waveguide layer located above the support layer.

In the solutions according to this application, materials of the first filling layer and the support layer may be the same. For example, the materials of the first filling layer and the support layer may both be silicon dioxide. Alternatively, materials of the first filling layer and the support layer may be different. For example, the material of the first filling layer may be benzocyclobutene (benzocyclobutene, BCB), and the material of the support layer may be silicon dioxide. The materials of the first filling layer and the support layer are not limited in this embodiment, provided that refractive indexes are less than a refractive index of the optical waveguide.

In a possible implementation, a thickness of the first filling layer is greater than or equal to a depth of the optical waveguide gap of the optical waveguide layer

In the solutions according to this application, the thickness of the first filling layer may be approximately equal to the depth of the optical waveguide gap, so that the first filling layer is flush with the optical waveguide layer. Alternatively, the thickness of the first filling layer may be slightly greater than the depth of the optical waveguide gap, so that a part of the first filling layer is located in the optical waveguide gap, and the other part of the filling layer is located on a top surface of the optical waveguide. This is not limited in this embodiment, and flexible selection may be performed based on an actual situation.

In a possible implementation, the optical phased board further includes a second filling layer.

The second filling layer is located in an optical waveguide gap of a first optical waveguide layer, and the first optical waveguide layer is an optical waveguide layer that is located at an outermost layer and whose top surface is away from the isolation layer

In the solutions according to this application, there is a filling layer in an optical waveguide gap of an optical waveguide layer, so that another optical waveguide layer is fastened above the filling layer. Then, another optical waveguide layer does not continue to be fastened above the first optical waveguide layer located at the top. Therefore, there may be no filling layer in the optical waveguide gap of the first optical waveguide layer. However, to keep consistency in an optical waveguide gap of each optical waveguide layer, the optical phased board may further include the second filling layer, and the second filling layer is located in the optical waveguide gap of the first optical waveguide layer.

A thickness of the second filling layer may be approximately equal to a depth of the optical waveguide gap of the first optical waveguide layer, so that the second filling layer is flush with the first optical waveguide layer. Alternatively, a thickness of the second filling layer is greater than a depth of the optical waveguide gap of the first optical waveguide layer, so that the top surface of the first optical waveguide layer is covered with the second filling layer.

In a possible implementation, the optical phased board further includes a substrate layer.

The substrate layer is supported at the bottom of a second optical waveguide layer, and the second optical waveguide layer is an optical waveguide layer that is located at an outermost layer and whose bottom surface is away from the isolation layer.

A material of the substrate layer may be silicon dioxide. A specific material of the substrate layer is not limited in this embodiment, provided that a refractive index of the substrate layer is less than the refractive index of the optical waveguide, so that a light beam can be transmitted in an optical waveguide of the second optical waveguide layer.

In the solutions according to this application, the second optical waveguide layer located at the bottom may be first fastened on a surface of the substrate layer, and then be fastened in a superimposed manner with the plurality of optical waveguide layers and the plurality of isolation layers. Alternatively, the plurality of optical waveguide layers and the plurality of isolation layers may be first fastened in a superimposed manner, and then the second optical waveguide layer located at the bottom is fastened on a surface of the substrate layer. This is not limited in this embodiment, and flexible selection may be performed based on an actual situation.

In a possible implementation, the optical phased board is in a stepped shape and has a plurality of steps, and the plurality of steps are located in a lateral area of the plurality of optical waveguides.

An upper surface of each step is provided with a plurality of pads, and each pad is electrically connected to an electrode of the optical waveguide.

In the solutions according to this application, there may be a plurality of steps on one side of the plurality of optical waveguides, or there may be a plurality of steps on both sides of the plurality of optical waveguides. This is not limited in this embodiment, and flexible disposition may be performed based on an actual situation.

In the solutions according to this application, a step may be formed in the following manner: For two adjacent isolation layers, a side of an isolation layer located below may extend beyond an isolation layer located above, to form the step, where the side of the isolation layer is a side located in the lateral area of the optical waveguides.

In the solutions according to this application, the step may alternatively be formed in the following manner: For two adjacent optical phased plates, a side of an optical phased plate located below may extend beyond an optical phased plate located above, to form the step, where the side of the optical phased plate is a side located in the lateral area of the optical waveguides.

A specific manner of forming the step is not limited in this embodiment, and may be flexibly selected by a person skilled in the art based on an actual situation.

In a possible implementation, the optical phased board has a plurality of through holes along a thickness dimension, the plurality of through holes are located in the lateral area of the plurality of optical waveguides, and each through hole has a conductive medium.

An outer surface of the second optical waveguide layer is provided with a plurality of solder balls, each solder ball is electrically connected to an electrode of the optical waveguide through the conductive medium in the through hole, and the second optical waveguide layer is an optical waveguide layer that is located at an outermost layer and whose bottom surface is away from the isolation layer

In the solutions according to this application, a through hole may be formed in a manner of laser perforation, or may be formed in a manner of etching perforation, or may be formed in a manner of combining laser light and etching. This is not limited in this embodiment, and flexible selection may be performed based on an actual situation. After the through hole is formed after perforation processing is completed, the through hole may be filled with a conductive medium, where the conductive medium may be metal copper. For example, the through hole may be filled with the metal copper through a combination of one or more of electroplating, deposition, chemical plating, and nano-particle sintering.

In a possible implementation, the optical phased board further includes a redistribution layer RDL, the RDL is located on the outer surface of the second optical waveguide layer, and the plurality of solder balls are located on a surface that is of the RDL and that is away from the second optical waveguide layer

The RDL is also a structure including a metal wiring layer and an insulation layer, and is configured to rearrange the pads of the optical phased board into a loose area, for example, rearrange the pads onto an outer surface of the optical phased board.

In the solutions according to this application, an electrode is electrically connected to a control circuit of the optical phased board in a manner of perforation, so that edges of layers of the optical phased board are flush, and no step needs to be disposed.

In a possible implementation, a quantity of optical waveguide layers is 2^{a}, and a is an integer greater than 1.

In the solutions according to this application, the quantity of optical waveguide layers may be 2^{a}, and a is an integer greater than 1. For example, a value of the quantity of optical waveguide layers may range from 8 to 512.

According to another aspect, a method for preparing an optical phased board is provided, where the method is applied to the foregoing optical phased board, and the method includes:
fastening a plurality of optical waveguide layers and a plurality of isolation layers in a superimposed manner, where each isolation layer is located between two adjacent optical waveguide layers, where
each optical waveguide layer includes a plurality of optical waveguides, and the plurality of optical waveguides are arranged side by side.

In the solutions according to this application, the plurality of optical waveguide layers and the plurality of isolation layers may be fastened layer by layer, or a plurality of optical phased plates may be first processed, and then the plurality of optical phased plates are fastened in a superimposed manner.

The optical phased board prepared by using the method includes the plurality of optical waveguide layers and the plurality of isolation layers, where each optical waveguide layer includes a plurality of optical waveguides, and the plurality of optical waveguides are arranged side by side. The plurality of optical waveguide layers and the plurality of isolation layers are arranged in an up-down superimposed manner, to form a two-dimensional optical waveguide array with a plurality of rows and a plurality of columns. Then, two-dimensional beam scanning may be performed on a light beam emitted from the two-dimensional optical waveguide array. It can be learned that the optical phased board may perform two-dimensional beam scanning.

In a possible implementation, each isolation layer includes a first filling layer and a support layer; and
the fastening a plurality of optical waveguide layers and a plurality of isolation layers in a superimposed manner includes:
filling an optical waveguide gap of an i^{th} optical waveguide layer with the first filling layer;
fastening the support layer on a surface that is of the first filling layer and that is away from the i^{th} optical waveguide layer; and
fastening an (i+1)^{th} optical waveguide layer on a surface that is of the support layer and that is away from the first filling layer, where a value of i ranges from 1 to m-1, and m is a quantity of optical waveguide layers, and is an integer greater than 1.

A thickness of the first filling layer may be greater than or equal to a depth of the optical waveguide gap.

In a possible implementation, the optical phased board further includes a second filling layer, where a material of the second filling layer may be BCB, or may be a material, such as silicon dioxide, having a refractive index less than a refractive index of the optical waveguide.

The method further includes: filling an optical waveguide gap of the first optical waveguide layer with the second filling layer, where the first optical waveguide layer is an optical waveguide layer that is located at an outermost layer and whose top surface is away from the isolation layer

In a possible implementation, the optical phased board further includes a substrate layer, where a material of the substrate layer may be silicon dioxide.

The method further includes:
fastening the bottom of a second optical waveguide layer to the substrate layer, where the second optical waveguide layer is an optical waveguide layer that is located at an outermost layer and whose bottom surface is away from the isolation layer.

In the solutions according to this application, before the plurality of optical waveguide layers and the plurality of isolation layers are alternately fastened in a superimposed manner, the bottom of the second optical waveguide layer is fastened to the substrate layer. Alternatively, after the plurality of optical waveguide layers and the plurality of isolation layers are alternately fastened in a superimposed manner, the bottom of the second optical waveguide layer is fastened to the substrate layer.

According to another aspect, an optical phased array system is provided, where the optical phased array system includes a light source, a plurality of coupling optical splitters, and the foregoing optical phased board.

The light source, the plurality of coupling optical splitters, and the optical phased board are sequentially arranged along an optical transmission path, and positions of each coupling optical splitter and one optical waveguide layer are opposite.

In the solutions according to this application, the light source is a laser, for example, may be a monochromatic laser. For another example, the light source may alternatively be a vertical-cavity surface-emitting laser. For another example, the light source may alternatively be frequency-adjustable laser light. For example, the light source may be specifically a 1550 nm laser A specific form of the light source is not limited in this embodiment, and may be flexibly selected based on a requirement.

In the solutions according to this application, a light beam generated by a light source may be split into optical waveguide layers of an optical phased board by using a plurality of optical fibers. Then, each light beam is coupled to each optical waveguide layer by using a coupler, and a light beam entering each optical waveguide layer is then split into optical waveguides by using a multi-level optical splitter. A light beam transmitted in each optical waveguide is directly emitted after phase modulation, to perform two-dimensional light beam scanning.

In the solutions according to this application, a light beam generated by a light source may be split into optical waveguide layers of an optical phased board by using a multi-level optical splitter, and then each light beam is coupled to each optical waveguide layer by using a coupler, and the light beam entering each optical waveguide layer is then split into optical waveguides by using another multi-level optical splitter. A light beam transmitted in each optical waveguide is directly emitted after phase modulation, to perform two-dimensional light beam scanning.

In a possible implementation, the optical phased array system further includes a collimator, where the collimator is located at a light emitting end of the optical phased board.

In the solutions according to this application, the collimator located at the light emitting end of the optical phased board can improve a collimation degree of a light beam emitted from the optical waveguide, and improve resolution of the two-dimensional beam scanning.

### BRIEF DESCRIPTION OF DRAWINGS

FIG. 1 is a schematic exploded diagram of a structure of an optical phased board according to this application;
FIG. 2 is a schematic diagram of a structure of an optical phased board according to this application;
FIG. 3 is a schematic diagram of a structure of an optical phased board according to this application;
FIG. 4 is a schematic diagram of a structure of an optical phased board according to this application;
FIG. 5 is a schematic diagram of a structure of an optical phased board according to this application;
FIG. 6 is a schematic diagram of a structure of an optical phased board according to this application;
FIG. 7 is a schematic diagram of a structure of an optical phased board according to this application;
FIG. 8 is a schematic diagram of a structure of an optical phased board according to this application;
FIG. 9 is a schematic diagram of a structure of an optical phased board according to this application;
FIG. 10 is a schematic diagram of a structure of an optical phased board according to this application;
FIG. 11 is a schematic diagram of a structure of an optical phased board according to this application;
FIG. 12 is a schematic diagram of a structure of an optical phased array system according to this application; and
FIG. 13 is a schematic diagram of a structure of an optical phased array system according to this application.

### Reference Numerals

1: Optical waveguide layer; 11: Optical waveguide; 111: Electrode;
1a: First optical waveguide layer; 1b: Second optical waveguide layer;
2: Isolation layer; 21: First filling layer; 22: Support layer;
3: Second filling layer; 4: Substrate layer; 5: Step; 51: Pad;
6: Through hole; 7: Solder ball; 8: RDL; and
100: Optical phased plate; 200: Light source; 300: Coupling optical splitter; 400: Optical phased board; 500: Collimator.

### DESCRIPTION OF EMBODIMENTS

Embodiments of this application provide an optical phased board. The optical phased board performs beam scanning by using an optical phased array (optical phase array, OPA). Compared with mechanical beam scanning, beam scanning performed by using the OPA has no mechanical inertia, is resistant to mechanical vibration, and has good stability.

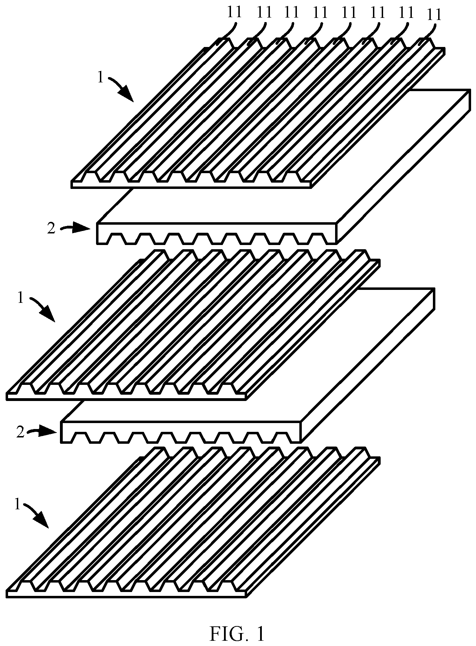

As shown in FIG. 1, the optical phased board includes a plurality of optical waveguide layers 1 and a plurality of isolation layers 2. Each optical waveguide layer 1 includes a plurality of optical waveguides 11, the plurality of optical waveguides 11 are arranged side by side, the plurality of optical waveguide layers 1 and the plurality of isolation layers 2 are arranged in a superimposed manner, and each isolation layer 2 is located between two adjacent optical waveguide layers 1.

The optical waveguide 11 is a channel for light beam transmission, and a material of the optical waveguide may be any one of an electro-optic material, a thermo-optic material, or a silicon-based material, for example, may be lithium niobate, lithium tantalate, or indium phosphate in the electro-optic material.

In an example, a shape of the optical waveguide 11 may be a ridge shape shown in FIG. 1, including a protrusion part and a flat part. In another example, the shape of the optical waveguide 11 may alternatively be a rectangle. A specific shape of the optical waveguide 11 is not limited in this embodiment, and the ridge shape shown in FIG. 1 may be used as an example.

The optical waveguide layer 1 may obtain a plurality of optical waveguides 11 in a manner of etching. An etched surface of the optical waveguide layer 1 may be referred to as a top surface, and a surface opposite to the top surface is referred to as a bottom surface of the optical waveguide layer 1.

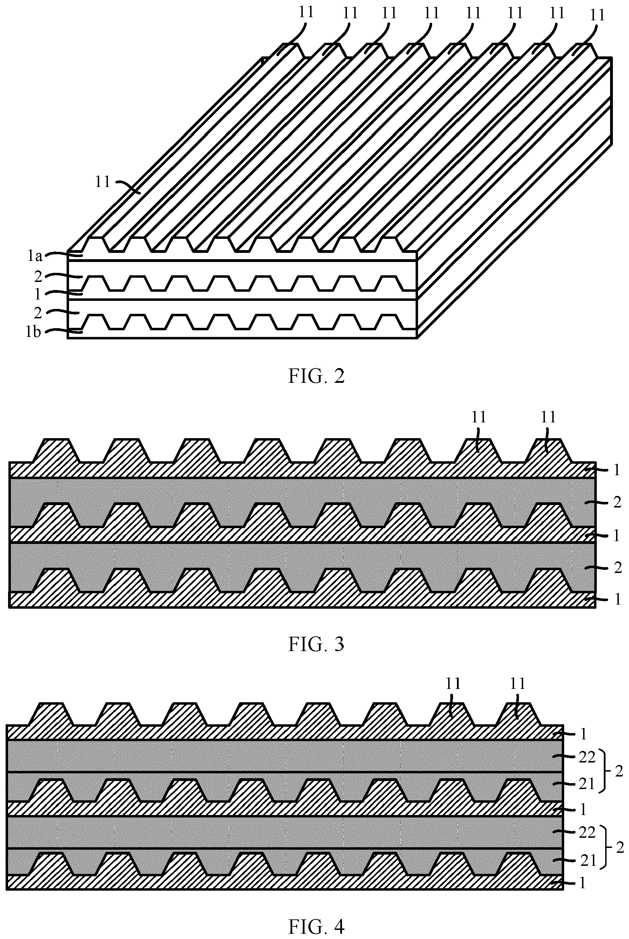

For ease of description of the optical phased board, the following introduces orientation terms: above and below. As shown in FIG. 2, a first optical waveguide layer 1a that is located at an outermost layer and whose top surface is away from the isolation layer 2 may be above, and a second optical waveguide layer 1b that is located at an outermost layer and whose bottom surface is away from the isolation layer 2 may be below. It should be noted that the orientation terms above and below are merely used for indication and description, and do not constitute a specific limitation.

The isolation layer 2 is configured to fill an optical waveguide gap of the optical waveguide layer 1, to fasten another optical waveguide layer 1. It should be noted that a refractive index of the optical waveguide 1 is higher than a refractive index of the isolation layer 2, so that a light beam can be transmitted in the optical waveguide 1.

In an example, a plurality of optical waveguide layers 1 and a plurality of isolation layers 2 are arranged in an up-down superimposed manner, and positions of optical waveguides 11 of two adjacent optical waveguide layers 1 may be opposite or may be staggered. This is not limited in this embodiment. An example in which the positions of optical waveguides 11 of two adjacent optical waveguide layers 1 are opposite may be used. Refer to FIG. 2.

In an example, the optical phased board may include m optical waveguide layers 1, each optical waveguide layer 1 includes n optical waveguides 11, where both m and n are integers greater than 1. Then, after the m optical waveguide layers 1 are arranged in a superimposed manner, as shown in FIG. 2 and FIG. 3, an m×n optical waveguide array with m rows and n columns may be obtained. Then, two-dimensional beam scanning may be performed on a light beam emitted from the m×n optical waveguide array.

A quantity m of the optical waveguide layers 1 may be 2^{a}, and a is an integer greater than 1. For example, a value of the quantity m of the optical waveguide layers 1 may range from 8 to 512.

A quantity n of optical waveguides 11 in each optical waveguide layer 1 may be 2^{b}, and b is an integer greater than 1. For example, the quantity n of optical waveguides 11 in each optical waveguide layer 1 may be 128.

In an example, the optical phased board may include 16 optical waveguide layers 1, and each optical waveguide layer 1 includes 128 optical waveguides 11. Then, the optical phased board may obtain a 16×128 optical waveguide array.

A specific quantity of optical waveguide layers 1 and a quantity of optical waveguides 11 included in each optical waveguide layer 1 are not limited in this embodiment, and may be flexibly selected by a person skilled in the art based on an actual situation.

Based on the foregoing descriptions, when the optical phased board is used for performing one-dimensional beam scanning, a light beam may be controlled to be introduced into an optical waveguide 11 in one of the optical waveguide layers 1, and a light beam is emitted from the optical waveguide 11 in the optical waveguide layer 1, to implement the one-dimensional beam scanning. When the optical phased board is used for performing two-dimensional beam scanning, a light beam may be controlled to be introduced into the optical waveguide 11 in each optical waveguide layer 1, and a light beam is emitted from the optical waveguide 11 in each optical waveguide layer 1, to implement the two-dimensional beam scanning.

It can be learned that, by using the optical phased board, not only the one-dimensional beam scanning can be performed, but also the two-dimensional beam scanning can be performed, thereby improving flexibility in using the optical phased board.

In addition, compared with a manner of performing two-dimensional beam scanning by using a two-dimensional optical antenna array, this manner of performing two-dimensional beam scanning by superimposing a plurality of optical waveguide layers 1 to form a two-dimensional optical waveguide array can improve resolution and a scanning angle of the beam scanning. The reasons are as follows:
In a solution of the two-dimensional optical antenna array, a size of an antenna element in the two-dimensional optical antenna array is large. Even if a spacing between antenna elements is shortened to the minimum, the spacing is still large, and a quantity of antenna elements is still small. However, the resolution of the beam scanning is positively correlated with the quantity of antenna elements. Therefore, the quantity of antenna elements is small, and the resolution of the beam scanning is low. The scanning angle is negatively correlated with the spacing between the antenna elements, and the spacing between the antenna elements is large. Therefore, the scanning angle is small.

However, in this solution, two-dimensional beam scanning is performed in a manner in which a plurality of optical waveguide layers 1 are superposed to form a two-dimensional optical waveguide array. Because a size of the optical waveguide 11 is less than a size of an antenna element, a spacing between the optical waveguides 11 is less than a spacing between antenna elements. For example, the spacing between the optical waveguides 11 may be 1.5 times an operating wavelength. Therefore, a large quantity of optical waveguides 11 may be arranged in each optical waveguide layer 1. Resolution of beam scanning is positively correlated with a quantity of optical waveguides 11, and the quantity of optical waveguides 11 increases, so that the resolution of the beam scanning can be improved. The scanning angle is negatively correlated with a spacing between two adjacent optical waveguides 11, and the spacing between the optical waveguides 11 is small. Therefore, the scanning angle is large.

It can be learned that two-dimensional beam scanning is performed by superimposing a plurality of optical waveguide layers 1 to form a two-dimensional optical waveguide array. In comparison with two-dimensional beam scanning performed by using a two-dimensional optical antenna array, in this solution, an emitting direction of a beam is consistent with a direction of a modulated traveling wave in an optical waveguide, and a beam transmitted in the optical waveguide does not need to be coupled to the two-dimensional optical antenna array for emission, thereby leaving out the two-dimensional optical waveguide array, improving optical waveguide density, improving integration of the optical phased board, and improving the resolution and the scanning angle of the beam scanning.

For example, the optical phased board may include 16 optical waveguide layers, and each optical waveguide layer includes 128 optical waveguides, to obtain a 16×128 two-dimensional optical waveguide array. A spacing between the optical waveguides may be 1.5 times an operating wavelength. If the operating wavelength is 1550 nm, the spacing between the optical waveguides may be 2325 nm. According to a test result, a beam width of the optical phased board can reach 0.26 degrees in a horizontal direction and 2.06 degrees in a vertical direction. A scanning speed may reach GHz, and there is no grating lobe (grating lobe) within a scanning angle of ±40 degrees.

A grating lobe is opposite to a main lobe. In beam scanning, a beam with highest energy in a scanning angle is referred to as the main lobe, and a beam that disperses energy of the main lobe is referred to as the grating lobe. Existence of the grating lobe disperses a large amount of energy of the main lobe, and reduces energy utilization. Therefore, the grating lobe needs to be suppressed or even eliminated.

As described above, the isolation layer 2 is configured to fill the waveguide gap, so that another optical waveguide layer 1 may be fastened above the waveguide gap. Correspondingly, the isolation layer 2 may be used as a filling layer, a thickness of the isolation layer 2 is approximately equal to a depth of the waveguide gap, and the isolation layer 2 is located in the optical waveguide gap of the optical waveguide layer 1. In this way, the optical waveguide layer 1 above may be fastened on a surface that is of the isolation layer 2 and that is away from the optical waveguide layer 1 below, and a bottom surface of the optical waveguide layer 1 above is in contact with a top surface of the optical waveguide layer 1 below.

Alternatively, the isolation layer 2 may be used as a filling layer, and a thickness of the isolation layer 2 is greater than a depth of a waveguide gap. As shown in FIG. 3, a part of the isolation layer 2 is located in the optical waveguide gap, and the other part is located on the top surface of the optical waveguide 11. In this way, the optical waveguide layer 1 above may be fastened on a surface that is of the isolation layer 2 and that is away from the optical waveguide layer 1 below, and the optical waveguide layer 1 above and the optical waveguide layer 1 below are separated by the isolation layer 2.

In another example, as shown in FIG. 4, the isolation layer 2 may include a first filling layer 21 and a support layer 22. As described above, each isolation layer 2 is located between two adjacent optical waveguide layers 1. Correspondingly, the first filling layer 21 is located in an optical waveguide gap of one of the two adjacent optical waveguide layers 1, and the support layer 22 is located between the first filling layer 21 and the other optical waveguide layer 1.

For example, as shown in FIG. 4, the first filling layer 21 is located in an optical waveguide gap of the optical waveguide layer 1 below, and the support layer 22 is located between the first filling layer 21 and the optical waveguide layer 1 above. The first filling layer 21 is configured to fill the optical waveguide gap of the lower optical waveguide layer 1, and the support layer 22 is used as a substrate of the optical waveguide layer 1 above to support the optical waveguide layer 1 above.

A thickness of the first filling layer 21 may be approximately equal to a depth of the optical waveguide gap, so that the first filling layer 21 is flush with the optical waveguide layer 1. Alternatively, a thickness of the first filling layer 21 may be slightly greater than a depth of the optical waveguide gap, so that a part of the first filling layer 21 is located in the optical waveguide gap, and the other part is located on the top surface of the optical waveguide. This is not limited in this embodiment, and flexible selection may be performed based on an actual situation.

Materials of the first filling layer 21 and the support layer 22 may be the same. For example, the materials of the first filling layer 21 and the support layer 22 may both be silicon dioxide. Alternatively, materials of the first filling layer 21 and the support layer 22 may be different. For example, the material of the first filling layer 21 may be benzocyclobutene (benzocyclobutene, BCB), and the material of the support layer 22 may be silicon dioxide.

The materials of the first filling layer 21 and the support layer 22 are not limited in this embodiment, provided that refractive indexes of the first filling layer and the support layer are less than a refractive index of the optical waveguide 11.

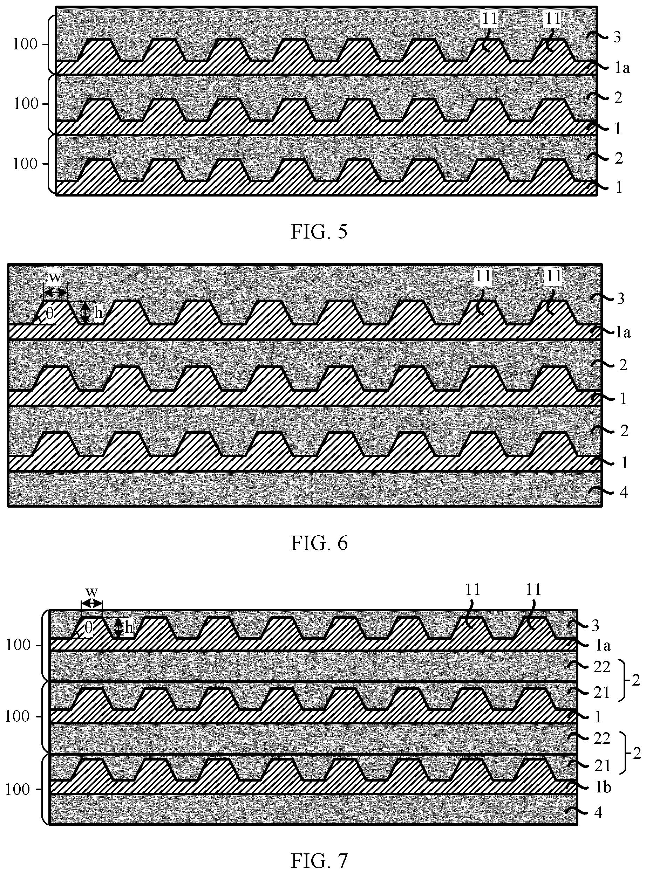

As described above, there is a filling layer in an optical waveguide gap of the optical waveguide layer 1, so that another optical waveguide layer 1 is fastened above the filling layer. Then, another optical waveguide layer does not continue to be fastened above the first optical waveguide layer 1a located at the top. Therefore, there may be no filling layer in the optical waveguide gap of the first optical waveguide layer 1a. However, to keep consistency in an optical waveguide gap of each optical waveguide layer 1, as shown in FIG. 5, the optical phased board may further include a second filling layer 3, and the second filling layer 3 is located in the optical waveguide gap of the first optical waveguide layer 1a.

A thickness of the second filling layer 3 may be approximately equal to a depth of the optical waveguide gap of the first optical waveguide layer 1a, so that the second filling layer 3 is flush with the first optical waveguide layer 1a. Alternatively, a thickness of the second filling layer 3 is greater than a depth of the optical waveguide gap of the first optical waveguide layer 1a, so that the top surface of the first optical waveguide layer 1a is covered with the second filling layer 3.

A refractive index of the second filling layer 3 is less than a refractive index of the optical waveguide 11, so that a light beam is transmitted in the optical waveguide 11 of the first optical waveguide layer 1a.

Materials of the first filling layer 21 and the second filling layer 3 may be the same, or may be different. For example, the materials may both be BCB, or the materials may both be silicon dioxide, or one material is BCB and the other material is silicon dioxide. This is not limited in this embodiment.

As shown in FIG. 5, in a solution in which an isolation layer 2 is used as a filling layer, an optical waveguide gap of each optical waveguide layer 1 is filled with the filling layer. Then, as shown in FIG. 5, an adjacent optical waveguide layer 1 below and a filling layer above (which is the second filling layer 3 or the isolation layer 2) may form an optical phased plate 100, and the plurality of optical phased plates 100 are arranged cyclically in an up-down superimposed manner, to form an optical phased board.

In an example, as shown in FIG. 6 and FIG. 7, an optical phased board may further include a substrate layer 4. The substrate layer 4 is supported at the bottom of a second optical waveguide layer 1b and is used as a substrate of the second optical waveguide layer 1b. The second optical waveguide layer 1b is an optical waveguide layer that is located at the outermost layer and whose bottom surface is away from the isolation layer 2.

A material of the substrate layer 4 may be silicon dioxide. A specific material of the substrate layer 4 is not limited in this embodiment, provided that a refractive index of the substrate layer 4 is less than the refractive index of the optical waveguide 11, so that a light beam can be transmitted in an optical waveguide 11 of the second optical waveguide layer 1b.

As shown in FIG. 7, the isolation layer 2 includes a first filling layer 21 and a support layer 22. In a solution in which the optical phased board includes a substrate layer 4, the first filling layer 21 and the second filling layer 3 may be the same, for example, have a same shape, a same size, and a same material. The support layer 22 and the substrate layer 4 may be the same, for example, have a same shape, a same size, and a same material. Then, the substrate layer 4, the second optical waveguide layer 1b, and the adjacent first filling layer 21 may be used as an optical phase control plate 100, the support layer 22, the optical waveguide layer 1, and the first filling layer 21 that are sequentially superimposed from bottom to top may be used as an optical phase control plate 100, and the support layer 22, the first optical waveguide layer 1a, and the second filling layer 3 that are sequentially superimposed from bottom to top may be used as an optical phased plate 100. As shown in FIG. 7, a plurality of optical phased plates 100 are arranged cyclically in an up-down superimposed manner, to form an optical phased board.

It should be noted that the substrate layer 4 plays a supporting role. If rigidity of a structure obtained by superposing a plurality of optical waveguide layers 1 and a plurality of isolation layers 2 meets a requirement, the substrate layer 4 may not be used for supporting the structure. To enhance rigidity of the optical phased board, correspondingly, the second optical waveguide layer 1b at the bottom may be fastened to a surface of the substrate layer 4.

Based on the foregoing descriptions, a structure form of the optical phased board may be as follows: As shown in FIG. 3, the optical phased board includes m optical waveguide layers 1 and m-1 isolation layers 2, and the m optical waveguide layers 1 and the m-1 isolation layers 2 are alternately arranged in a superimposed manner from bottom to top.

Another structure form of the optical phased board may be as follows: As shown in FIG. 5, the optical phased board includes m optical waveguide layers 1, m-1 isolation layers 2, and one second filling layer 3. The m optical waveguide layers 1 and the m-1 isolation layers 2 are alternately arranged in a superimposed manner from bottom to top, and the second filling layer 3 is located in an optical waveguide gap and a top surface of an uppermost optical waveguide layer 1. In the structure form, the isolation layer 2 and the second filling layer 3 may be the same, for example, have a same shape, size, and material.

Another structure form of the optical phased board may be as follows: As shown in FIG. 6, the optical phased board includes m optical waveguide layers 1, m-1 isolation layers 2, one second filling layer 3, and one substrate layer 4, the m optical waveguide layers 1 and the m-1 isolation layers 2 are alternately arranged in a superimposed manner from bottom to top, and the second filling layer 3 is located in an optical waveguide gap and a top surface of an uppermost optical waveguide layer 1. The substrate layer 4 is supported at a bottommost optical waveguide layer 1. In the structure form, the isolation layer 2 and the second filling layer 3 may be the same, for example, have a same shape, size, and material.

Another structure form of the optical phased board may be as follows: As shown in FIG. 7, the optical phased board includes m optical waveguide layers 1, m-1 isolation layers 2, one second filling layer 3, and one substrate layer 4, and each isolation layer 2 includes a first filling layer 21 and a support layer 22. The m optical waveguide layers 1 and the m-1 isolation layers 2 are alternately arranged in a superimposed manner from bottom to top, the first filling layer 21 is located in an optical waveguide gap and a top surface of an optical waveguide layer 1 below, and the support layer 22 supports an optical waveguide layer 1 above. The second filling layer 3 is located in an optical waveguide gap and a top surface of an uppermost optical waveguide layer 1. The substrate layer 4 is supported at a bottommost optical waveguide layer 1. In the structure form, the first filling layer 21 and the second filling layer 3 of the isolation layer 2 may be the same, for example, have a same shape, size, and material. The support layer 22 and the substrate layer 4 of the isolation layer 2 may be the same, for example, have a same shape, size, and material.

A specific structure form of the optical phased board is not limited in this embodiment, provided that an optical waveguide array arranged in two dimensions can be formed.

The foregoing is the specific structure form of the optical phased board. The following describes a fanout manner of a pad (pad) of the optical phased board.

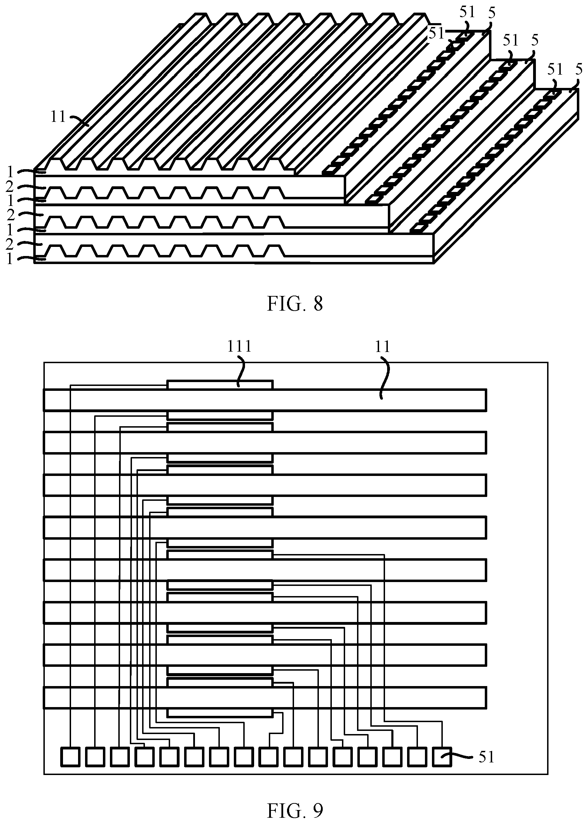

In an example, refer to FIG. 9. There are electrodes 111 on two sides of each optical waveguide 11, and the electrodes 111 are configured to apply a voltage to the two sides of the optical waveguide 11, to form an electric field, and modulate a phase of a light beam transmitted inside the optical waveguide 11.

To implement an electrical connection between the electrode 111 and the control circuit of the optical phased board, in one implementation, the pad may be located on a surface of the isolation layer 2, or the pad may be located on a surface of the optical phased plate 100. The isolation layer 2 is thin, and the optical phased plate 100 is also thin. Therefore, to dispose a pad at each layer, correspondingly, as shown in FIG. 8, the optical phased board is in a stepped shape and has a plurality of steps 5, and the plurality of steps 5 are located in a lateral area of the plurality of optical waveguides 11. An upper surface of each step 5 has a plurality of pads 51, and each pad 51 is electrically connected to an electrode 111 of the optical waveguide 11.

There may be a plurality of steps 5 on one side of the plurality of optical waveguides 11, or there may be a plurality of steps 5 on both sides of the plurality of optical waveguides 11. This is not limited in this embodiment, and flexible disposition may be performed based on an actual situation.

In an example, the step 5 may be formed in the following manner: For two adjacent isolation layers 2, a side of the isolation layer 2 located below may extend beyond the isolation layer 2 located above, to form the step 5, where the side of the isolation layer 2 is a side located in a lateral area of the optical waveguides 11.

In another example, the manner of forming the step 5 may be as follows: For the two adjacent optical phased plates 100 shown in FIG. 5 or FIG. 7, a side of the optical phased plate 100 located below may extend beyond the optical phased plate 100 located above, to form the step 5, where the side of the optical phased plate 100 is a side located in a lateral area of the optical waveguides 11.

A specific manner of forming the step 5 is not limited in this embodiment, and may be flexibly selected by a person skilled in the art based on an actual situation.

In this way, in a manner of disposing the step 5, a pad may be disposed on a surface of each isolation layer 2, or a pad may be disposed on a surface of each optical phased plate 100.

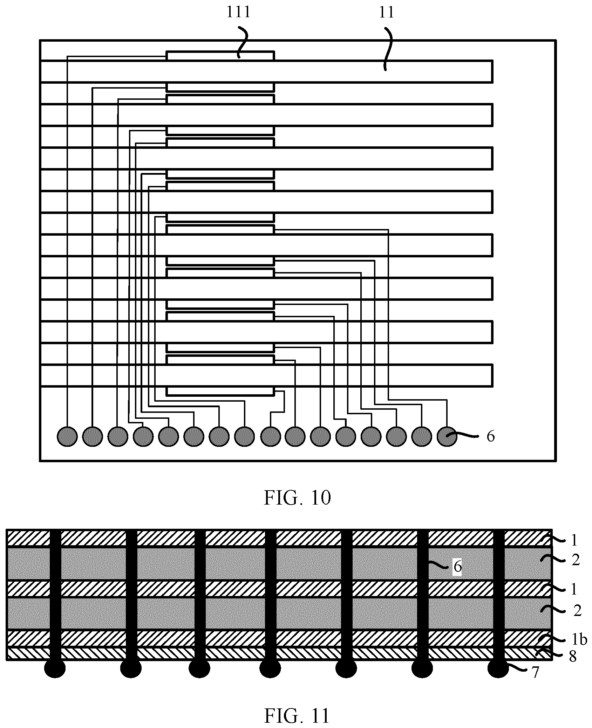

To implement an electrical connection between the electrode 111 and the control circuit of the optical phased board, another implementation may be as follows: As shown in FIG. 10 and with reference to FIG. 11, the optical phased board has a plurality of through holes 6 along a thickness direction, the plurality of through holes 6 are located in a lateral area of the plurality of optical waveguides 11, and each through hole 6 has a conductive medium. An outer surface of the second optical waveguide layer 1b is provided with a plurality of solder balls 7, each solder ball 7 is used as a pad of the optical phased board, each solder ball 7 is electrically connected to the electrode 111 of the optical waveguide 11 by using the conductive medium in the through hole 6, and the second optical waveguide layer 1b is an optical waveguide layer that is located at the outermost layer and whose bottom is away from the isolation layer 2.

The through hole 6 may be formed in a manner of laser perforation, or may be formed in a manner of etching perforation, or may be formed in a manner of combining laser light and etching. This is not limited in this embodiment, and flexible selection may be performed based on an actual situation.

In an example, perforation processing may be performed after the layers are superimposed, or the perforation processing may be performed in a process of arranging the layers in a superimposed manner. This is not limited in this embodiment.

After the through hole 6 is formed after the perforation processing is completed, the through hole 6 may be filled with a conductive medium, where the conductive medium may be metal copper. For example, the through hole 6 may be filled with the metal copper through a combination of one or more of electroplating, deposition, chemical plating, and nano-particle sintering.

In an example, the optical phased board may further include a redistribution layer (redistribution layer, RDL) 8, the RDL 8 is located on the outer surface of the second optical waveguide layer 1b, and the plurality of solder balls 7 may be located on a surface that is of the RDL 8 and that is away from the second optical waveguide layer 1b.

The RDL 8 is also a structure including a metal wiring layer and an insulation layer, and is configured to rearrange pads of the optical phased board into a loose area, for example, rearrange the pads onto an outer surface of the optical phased board.

The electrode 111 is electrically connected to the control circuit of the optical phased board in the manner of perforation, so that edges of layers of the optical phased board are flush, and no step needs to be disposed.

In embodiments of this application, the optical phased board includes a plurality of optical waveguide layers 1 and a plurality of isolation layers 2. Each optical waveguide layer 1 includes a plurality of optical waveguides 11, and the plurality of optical waveguides 11 are arranged side by side. The plurality of optical waveguide layers 1 and the plurality of isolation layers 2 are arranged in an up-down superimposed manner, to form a two-dimensional optical waveguide array with a plurality of rows and a plurality of columns. Then, two-dimensional beam scanning may be performed on a light beam emitted from the two-dimensional optical waveguide array. It can be learned that the optical phased board may perform two-dimensional beam scanning.

In addition, in the optical phased board, because a size of the optical waveguide 11 is less than a size of an antenna element, a spacing between the optical waveguides 11 is less than a spacing between antenna elements. For example, the spacing between the optical waveguides 11 may be 1.5 times an operating wavelength. Therefore, a large quantity of optical waveguides 11 may be arranged in each optical waveguide layer 1. Resolution of beam scanning is positively correlated with a quantity of optical waveguides 11, and the quantity of optical waveguides 11 increases, so that the resolution of the beam scanning can be improved. The scanning angle is negatively correlated with a spacing between two adjacent optical waveguides 11, and the spacing between the optical waveguides 11 is small. Therefore, the scanning angle can be increased.

This application further provides a method for preparing an optical phased board. The method is applied to the foregoing optical phased board. The method may include: fastening a plurality of optical waveguide layers 1 and a plurality of isolation layers 2 in a superimposed manner, where each isolation layer 2 is located between two adjacent optical waveguide layers 1, each optical waveguide layer 1 includes a plurality of optical waveguides 11, and the plurality of optical waveguides 11 are arranged side by side.

In an example, the plurality of optical waveguide layers 1 and the plurality of isolation layers 2 may be fastened layer by layer, or a plurality of optical phased plates 100 may be first processed, and then the plurality of optical phased plates 100 are fastened in a superimposed manner.

In an example, each isolation layer 2 may include a first filling layer 21 and a support layer 22. Correspondingly, a process of fastening the plurality of optical waveguide layers 1 and the plurality of isolation layers 2 in a superimposed manner may include:

First, the optical waveguide gap of an i^{th} optical waveguide layer 1 is filled with the first filling layer 21; then, the support layer 22 is fastened on a surface that is of the first filling layer 21 and that is away from the i^{th} optical waveguide layer 1; and then, an (i+1)^{th} optical waveguide layer 1 is fastened on a surface that is of the support layer 22 and that is away from the first filling layer 21. A value of i ranges from 1 to m-1, and m is a quantity of optical waveguide layers 1, and is an integer greater than 1.

A thickness of the first filling layer 21 may be greater than or equal to a depth of the optical waveguide gap.

For example, the optical phased board includes four optical waveguide layers 1. First, an optical waveguide gap of a 1^{st} optical waveguide layer 1 is filled with a 1^{st} first filling layer 21; then, a 1^{st} support layer 22 is fastened on a surface that is of the 1^{st} first filling layer 21 and that is away from the 1^{st} optical waveguide layer 1; and then, a 2^{nd} optical waveguide layer 1 is fastened on a surface that is of the 1^{st} support layer 22 and that is away from the 1^{st} first filling layer 21. The foregoing process is repeated. First, an optical waveguide gap of the 2^{nd} optical waveguide layer 1 is filled with a 2^{nd} first filling layer 21; then, a 2^{nd} support layer 22 is fastened on a surface that is of the 2^{nd} first filling layer 21 and that is away from the 2^{nd} optical waveguide layer 1; and then, a 3^{rd} optical waveguide layer 1 is fastened on a surface that is of the 2^{nd} support layer 22 and that is away from the 2^{nd} first filling layer 21. In this way, fastening is performed layer by layer in a superimposed manner, until a 4^{th} optical waveguide layer 1 is fastened to the surface of a 3^{rd} support layer 22.

In an example, the optical phased board may further include a second filling layer 3. Correspondingly, after a plurality of optical waveguide layers 1 and a plurality of isolation layers 2 are alternately fastened in a superimposed manner, the method may further include: filling an optical waveguide gap of the first optical waveguide layer 1a with the second filling layer 3, where the first optical waveguide layer 1a is an optical waveguide layer that is located at an outermost layer and whose top surface is away from the isolation layer 2.

The second filling layer 3 and the first filling layer 21 may be the same, for example, have a same shape, size, and material.

In an example, the optical phased board may further include a substrate layer 4. Correspondingly, after the plurality of optical waveguide layers 1 and the plurality of isolation layers 2 are alternately fastened in a superimposed manner, or before the plurality of optical waveguide layers 1 and the plurality of isolation layers 2 are alternately fastened in a superimposed manner, the method may further include: fastening the bottom of a second optical waveguide layer 1b to the substrate layer 4, where the second optical waveguide layer 1b is an optical waveguide layer that is located at an outermost layer and whose bottom faces outward.

Based on the foregoing descriptions, the optical phased board has a plurality of structure forms. The following may describe a preparation process of the optical phased board by using the structure forms shown in FIG. 6 and FIG. 7.

A method for preparing the optical phased board shown in FIG. 6 may include:
In step 1, one optical waveguide layer 1 is fastened on a surface of the substrate layer 4, the optical waveguide layer 1 is etched to form a plurality of optical waveguides 11, and electrodes 111 are deposited on two sides of each optical waveguide 11, where a material of the electrode 111 may be gold.

As shown in FIG. 6, a width w of the optical waveguide 11 formed by etching the optical waveguide layer 1 may be about 1 micrometer, an etching depth h may be about 350 nanometers, a shape of the formed optical waveguide 11 is a ridge shape, and an inclination angle θ of the ridge shape may be about 80 degrees.

In step 2, the isolation layer 2 is fastened on an upper surface of the optical waveguide layer 1 in step 1. For example, the optical waveguide gap is filled with the isolation layer 2. If a material of the isolation layer 2 is BCB, BCB may be spin-coated in the optical waveguide gap. If a material of the isolation layer 2 is silicon dioxide, silicon dioxide may be deposited in the optical waveguide gap.

In step 3, another optical waveguide layer 1 is fastened on an upper surface of the isolation layer 2 in step 2. Then, the foregoing step 1 to step 3 are repeated, except that the optical waveguide layer 1 is fastened on a surface of the isolation layer 2 until the last optical waveguide layer 1 is fastened on the surface of the isolation layer 2. Then, the second filling layer 3 is fastened on a surface of an uppermost optical waveguide layer 1. An optical waveguide gap of the uppermost optical waveguide layer 1 is filled with the second filling layer 3. If a material of the second filling layer 3 is BCB, BCB may be spin-coated in the optical waveguide gap. If a material of the second filling layer 3 is silicon dioxide, silicon dioxide may be deposited in the optical waveguide gap.

A method for preparing the optical phased board shown in FIG. 7 may be that layers are sequentially fastened in a superimposed manner, and the method may include the following steps:
In step 1, one optical waveguide layer 1 is fastened on a surface of the substrate layer 4, the optical waveguide layer 1 is etched to form a plurality of optical waveguides 11, and electrodes 111 are deposited on two sides of each optical waveguide 11, where a material of the electrode 111 may be gold.

As shown in FIG. 6, a width w of the optical waveguide 11 formed by etching the optical waveguide layer 1 may be about 1 micrometer, an etching depth h may be about 350 nanometers, a shape of the formed optical waveguide 11 is a ridge shape, and an inclination angle θ of the ridge shape may be about 80 degrees.

In step 2, the first filling layer 21 is fastened on an upper surface of the optical waveguide layer 1 in step 1. For example, the optical waveguide gap is filled with the first filling layer 21. If a material of the first filling layer 21 is BCB, BCB may be spin-coated in the optical waveguide gap. If a material of the first filling layer 21 is silicon dioxide, silicon dioxide may be deposited in the optical waveguide gap.

In step 3, the support layer 22 is fastened on an upper surface of the first filling layer 21 in step 2. If a material of the first filling layer 21 is BCB, the support layer 22 may be fastened in a manner of adhesion. If a material of the first filling layer 21 is silicon dioxide, the support layer 22 may be fastened in a manner of direct bonding.

In step 4, another optical waveguide layer 1 is fastened on a surface of the support layer 22 in step 3. Then, the foregoing step 1 to step 4 are repeated, except that the optical waveguide layer 1 is fastened to the surface of the support layer 22, until the last optical waveguide layer 1 is fastened to the surface of the support layer 22. Then, the second filling layer 3 is fastened on a surface of the uppermost optical waveguide layer 1. The optical waveguide gap of the uppermost optical waveguide layer 1 is filled with the second filling layer 3. If a material of the second filling layer 3 is BCB, BCB may be spin-coated in the optical waveguide gap. If a material of the second filling layer 3 is silicon dioxide, silicon dioxide may be deposited in the optical waveguide gap.

Another method for preparing the optical phased board shown in FIG. 7 may be: first preparing a plurality of optical phased plates 100, and then sequentially fastening the plurality of optical phased plates 100 in a superimposed manner. The method may include the following steps:
In this process, the substrate layer 4 and the support layer 22 may be the same, and the first filling layer 21 and the second filling layer 3 may be the same.

In step 1, a plurality of optical phased plates 100 are first prepared. A preparation process of each optical phased plate 100 may be: First, the optical waveguide layer 1 is fastened to a surface of the substrate layer 4, or the optical waveguide layer 1 is fastened to a surface of the support layer 22. Then, the optical waveguide layer 1 is etched to form a plurality of optical waveguides 11, and electrodes 111 are deposited on two sides of each optical waveguide 11, where a material of the electrode 111 may be gold. Then, the optical waveguide gap of the optical waveguide layer 1 is filled with the first filling layer 21, or the optical waveguide gap of the optical waveguide layer 1 is filled with the second filling layer 3. If a material of the first filling layer 21 is BCB, BCB may be spin-coated in the optical waveguide gap. If a material of the first filling layer 21 is silicon dioxide, silicon dioxide may be deposited in the optical waveguide gap. An optical phased plate 100 including a support layer, an optical waveguide layer, and a filling layer is obtained, where the support layer is located on a bottom surface of the optical waveguide layer, and the filling layer is located in an optical waveguide gap and a top surface of the optical waveguide layer

In step 2, after the plurality of optical phased plates 100 are obtained in the manner of step 1, the plurality of optical phased plates 100 may be fastened in a superimposed manner, where a support layer and a filling layer of two adjacent optical phased plates 100 are fastened. If a material of the filling layer is BCB, the two optical phased plates 100 may be fastened in a manner of adhesion. If a material of the filling layer is a solid-state material such as silicon dioxide, the two optical phased plates 100 may be fastened in a manner of direct bonding.

A process of preparing the optical phased board is not specifically limited in this embodiment, provided that an optical waveguide array including a plurality of rows and a plurality of columns can be prepared.

In embodiments of this application, the optical phased board prepared by using the foregoing method includes a plurality of optical waveguide layers and a plurality of isolation layers. Each optical waveguide layer includes a plurality of optical waveguides, and the plurality of optical waveguides are arranged side by side. The plurality of optical waveguide layers and the plurality of isolation layers are arranged in an up-down superimposed manner, to form a two-dimensional optical waveguide array with a plurality of rows and a plurality of columns. Then, two-dimensional beam scanning may be performed on a light beam emitted from the two-dimensional optical waveguide array. It can be learned that the optical phased board may perform two-dimensional beam scanning.

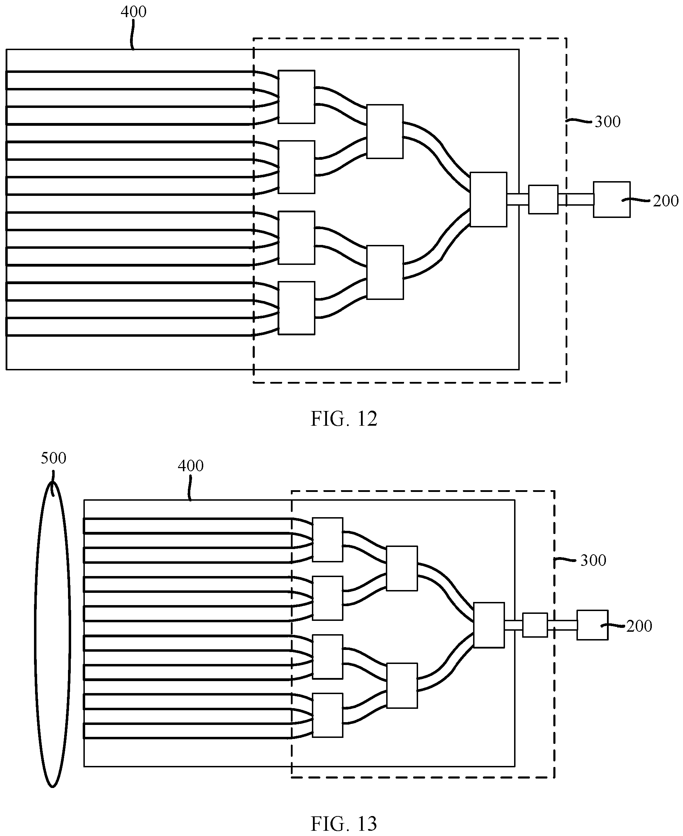

This application further provides an optical phased array system. As shown in FIG. 12, the optical phased array system may include a light source 200, a plurality of coupling optical splitters 300, and the foregoing optical phased board 400. The light source 200, the plurality of coupling optical splitters 300, and the optical phased board 400 are sequentially arranged along an optical transmission path, and positions of each coupling optical splitter 300 and one optical waveguide layer 1 are opposite.

In an example, the light source 200 is a laser, for example, may be a monochromatic laser. For another example, the light source 200 may alternatively be a vertical-cavity surface-emitting laser (vertical-cavity surface-emitting laser, VCSEL), or the like, where the VCSEL may also be translated into vertical resonance cavity surface emitting laser light. For another example, the light source 200 may alternatively be frequency-adjustable laser light. For example, the light source 200 may be specifically a 1550 nm laser A specific form of the light source 200 is not limited in this embodiment, and may be flexibly selected based on a requirement.

In an example, the coupling optical splitter 300 may include a coupler and at least one multi-level optical splitter, where the coupler is configured to couple a light beam to an optical waveguide for transmission. The multi-level optical splitter is configured to split light into a plurality of beams. For example, the multi-level optical splitter is configured to split a light beam coupled to the optical waveguide layer into optical waveguides. For another example, the multi-level optical splitter is configured to split a light beam generated by a light source to optical waveguide layers.

In an example, a light beam generated by the light source 200 may be split to optical waveguide layers of the optical phased board by using a plurality of optical fibers, and then each light beam is coupled to each optical waveguide layer by using a coupler, and a light beam entering each optical waveguide layer is then split to optical waveguides by using a multi-level optical splitter. A light beam transmitted in each optical waveguide 11 is directly emitted after phase modulation, to perform two-dimensional light beam scanning.

In another example, a light beam generated by the light source 200 may be split to optical waveguide layers of the optical phased board by using a multi-level optical splitter, and then each light beam is coupled to each optical waveguide layer by using a coupler, and a light beam entering each optical waveguide layer is split to optical waveguides by using another multi-level optical splitter. A light beam transmitted in each optical waveguide 11 is directly emitted after phase modulation, to perform two-dimensional light beam scanning.

In an example, to improve a collimation degree of light emitted from the optical waveguide, correspondingly, as shown in FIG. 13, the optical phased array system further includes a collimator 500, and the collimator 500 is located at a light emitting end of the optical phased board 400.

In embodiments of this application, the optical phased board in the optical phased array system includes a plurality of optical waveguide layers and a plurality of isolation layers. Each optical waveguide layer includes a plurality of optical waveguides, and the plurality of optical waveguides are arranged side by side. The plurality of optical waveguide layers and the plurality of isolation layers are arranged in an up-down superimposed manner, to form a two-dimensional optical waveguide array with a plurality of rows and a plurality of columns. Then, two-dimensional beam scanning may be performed on a light beam emitted from the two-dimensional optical waveguide array. It can be learned that the optical phased board may perform two-dimensional beam scanning.

The foregoing descriptions are merely embodiments of this application, but are not intended to limit this application. Any modification, equivalent replacement, or improvement made without departing from the principle of this application shall fall within the protection scope of this application.

## Claims

1. An optical phased board, wherein the optical phased board comprises a plurality of optical waveguide layers (1) and a plurality of isolation layers (2);
each optical waveguide layer (1) comprises a plurality of optical waveguides (11), and the plurality of optical waveguides (11) are arranged side by side; and
the plurality of optical waveguide layers (1) and the plurality of isolation layers (2) are arranged in a superimposed manner, and each isolation layer (2) is located between two adjacent optical waveguide layers (1).

2. The optical phased board according to claim 1, wherein each isolation layer (2) comprises a first filling layer (21) and a support layer (22); and
the first filling layer (21) is located in an optical waveguide gap of one of two adjacent optical waveguide layers (1), and the support layer (22) is located between the first filling layer (21) and the other optical waveguide layer (1).

3. The optical phased board according to claim 2, wherein a thickness of the first filling layer (21) is greater than or equal to a depth of the optical waveguide gap of the optical waveguide layer (1).

4. The optical phased board according to any one of claims 1 to 3, wherein the optical phased board further comprises a second filling layer (3); and
the second filling layer (3) is located in an optical waveguide gap of a first optical waveguide layer (1a), and the first optical waveguide layer (1a) is an optical waveguide layer that is located at an outermost layer and whose top surface is away from the isolation layer (2).

5. The optical phased board according to any one of claims 1 to 4, wherein the optical phased board further comprises a substrate layer (4); and
the substrate layer (4) is supported at the bottom of a second optical waveguide layer (1b), and the second optical waveguide layer (1b) is an optical waveguide layer that is located at an outermost layer and whose bottom surface is away from the isolation layer (2).

6. The optical phased board according to any one of claims 1 to 5, wherein the optical phased board is in a stepped shape and has a plurality of steps (5), and the plurality of steps (5) are located in a lateral area of the plurality of optical waveguides (11); and
an upper surface of each step (5) is provided with a plurality of pads (51), and each pad (51) is electrically connected to an electrode (111) of the optical waveguide (11).

7. The optical phased board according to any one of claims 1 to 5, wherein the optical phased board has a plurality of through holes (6) along a thickness direction, the plurality of through holes (6) are located in the lateral area of the plurality of optical waveguides (11), and each through hole (6) has a conductive medium; and
an outer surface of the second optical waveguide layer (1b) is provided with a plurality of solder balls (7), each solder ball (7) is electrically connected to the electrode (111) of the optical waveguide (11) through the conductive medium in the through hole (6), and the second optical waveguide layer (1b) is the optical waveguide layer that is located at the outermost layer and whose bottom surface is away from the isolation layer (2).

8. The optical phased board according to claim 7, wherein the optical phased board further comprises a redistribution layer RDL (8), the RDL (8) is located on the outer surface of the second optical waveguide layer (1b), and the plurality of solder balls (7) are located on a surface that is of the RDL (8) and that is away from the second optical waveguide layer (1b).

9. The optical phased board according to any one of claims 1 to 8, wherein a quantity of optical waveguide layers (1) is 2^{a}, and a is an integer greater than 1.

10. A method for preparing an optical phased board, wherein the method is applied to the optical phased board according to any one of claims 1 to 9, and the method comprises:
fastening the plurality of optical waveguide layers (1) and the plurality of isolation layers (2) in a superimposed manner, and each isolation layer (2) is located between two adjacent optical waveguide layers (1); and
each optical waveguide layer (1) comprises a plurality of optical waveguides (11), and the plurality of optical waveguides (11) are arranged side by side.

11. The method according to claim 10, wherein each isolation layer (2) comprises a first filling layer (21) and a support layer (22); and
the fastening the plurality of optical waveguide layers (1) and the plurality of isolation layers (2) in a superimposed manner comprises:
filling an optical waveguide gap of an i^{th} optical waveguide layer (1) with the first filling layer (21);
fastening the support layer (22) on a surface that is of the first filling layer (21) and that is away from the i^{th} optical waveguide layer (1); and
fastening an (i+1)^{th} optical waveguide layer (1) on a surface that is of the support layer (22) and that is away from the first filling layer (21), wherein a value of i ranges from 1 to m-1, and m is a quantity of optical waveguide layers (1), and is an integer greater than 1.

12. The method according to claim 10 or 11, wherein the optical phased board further comprises a second filling layer (3); and
the method further comprises:
filling an optical waveguide gap of a first optical waveguide layer (1a) with the second filling layer (3), wherein the first optical waveguide layer (1a) is an optical waveguide layer that is located at an outermost layer and whose top surface is away from the isolation layer (2).

13. The method according to any one of claims 10 to 12, wherein the optical phased board further comprises a substrate layer (4); and
the method further comprises:
fastening the bottom of a second optical waveguide layer (1b) to the substrate layer (4), wherein the second optical waveguide layer (1b) is an optical waveguide layer that is located at an outermost layer and whose bottom surface is away from the isolation layer (2).

14. An optical phased array system, wherein the optical phased array system comprises a light source (200), a plurality of coupling optical splitters (300), and the optical phased board (400) according to any one of claims 1 to 9; and
the light source (200), the plurality of coupling optical splitters (300), and the optical phased board (400) are sequentially arranged along an optical transmission path, and positions of each coupling optical splitter (300) and one optical waveguide layer (1) are opposite.

15. The optical phased array system according to claim 14, wherein the optical phased array system further comprises a collimator (500), and the collimator (500) is located at a light emitting end of the optical phased board (400).
